Europäisches Patentamt

European Patent Office

Office européen des brevets

(19)

(11) Publication number: **0 147 067**

**A1**

(12)

# EUROPEAN PATENT APPLICATION

(21) Application number: 84308197.7

(22) Date of filing: 27.11.84

(51) Int. Cl.⁴: **C 09 J 3/14**
C 08 J 7/02, C 08 F 220/00

(30) Priority: 29.11.83 GB 8331778

(43) Date of publication of application:
03.07.85 Bulletin 85/27

(84) Designated Contracting States:
BE DE FR GB IT NL SE

(71) Applicant: ALLIED COLLOIDS LIMITED
P.O. Box 38 Low Moor
Bradford West Yorkshire, BD12 0JZ(GB)

(72) Inventor: Allan, Kenneth
22 Stamperland Gardens
Clarkston, Glasgow(GB)

(72) Inventor: Stockwell, John Robert
22 Allerton Upper Green Allerton
Bradford, West Yorkshire(GB)

(72) Inventor: Walker, John
1 Salisbury Place Hipperholme
Halifax, West Yorkshire(GB)

(74) Representative: Lawrence, Peter Robin
Broughton et al,
GILL JENNINGS & EVERY 53-64 Chancery Lane
London WC2A 1HN(GB)

(54) Pressure sensitive adhesives.

(57) A pressure sensitive adhesive is formed of 2-ethyl hexyl acrylate or other tackifying monomers, optionally methyl methacrylate or other diluent monomers, and 7 to 30% by weight hydrophilic monomers selected from methacrylic acid and salts thereof, hydroxy alkyl acrylates and hydroxy alkyl methacrylates and can provide an adhesive coating on a label or other sheet substrate such that the substrate can be bonded to a bottle or other hard surface to resist atmospheric moisture but can be removed, with removal of the adhesive, by washing with warm water.

EP 0 147 067 A1

ALLIED COLLOIDS LIMITED                    60/2226/01

PRESSURE SENSITIVE ADHESIVES

It is known to formulate pressure sensitive adhesive compositions from polymers of 2-ethyl hexyl acrylate or other medium chain length alkyl acrylates or methacrylates, optionally with other acrylate ester such as butyl acrylate or methyl methacrylate. The polymerisation is often by solution polymerisation (to give a linear polymer which may be subsequently cross-linked) but can be by emulsion or suspension polymersation to give linear or cross-linked polymers.

It is also known to include other copolymerisable monomers in the polymerisable mixture from which the polymers are made. Amongst the copolymerisable monomers that have been proposed are various hydrophilic monomers. For instance in Japanese Kokai 8231972 a cross-linked polymer is formed by emulsion polymerisation of a mixture containing 2% acrylic acid and 1% itaconic acid and in Japanese Kokai 8270162 a polymer is made by emulsion polymerisation of a mixture containing 4% methacrylic acid and this polymer will cross-link after casting due to the presence of methylol acrylamide in the mixture. In British Patent Specification 2070631 a polymer is made by solution polymerisation from a mixture containing 4 to 10% acrylic acid and up to 62% butyl acrylate.

In German 3018131A a polymer is made by solution polymerisation of a mixture containing a small amount of hydroxypropyl acrylate and this polymer is then reacted with an isocyanate to form urethane groups. The resultant polymer will therefore be free of hydroxypropyl acrylate groups.

In US Patent 3691140 an unstable dispersion of polymer particles is made by suspension polymerisation of an alkyl acrylate in the presence of surfactant and an anionic monomer, ammonium and sodium acrylate being exemplified. Some of the resultant particles are very large and the polymerisation conditions probably result in a concentration of hydrophilic polymer around each particle.

We are concerned with pressure sensitive adhesive compositions for adhesion of, for instance, labels to hard surfaces such as plastic or glass bottles or other containers. A notorious problem with currently available adhesives is that either they adhere weakly to the surface such that they can be removed after use but suffer a significant risk of accidental removal during use, or they adhere sufficiently strongly during use but are then very difficult to remove after use.

A polymer according to the invention that will serve as a pressure sensitive, warm water removable, adhesive is the polymer formed by copolymerising 7 to 30% by weight hydrophilic monomers selected from methacrylic acid, water soluble salts of methacrylic acid with an amine or alkali metal, hydroxy alkyl acrylates and hydroxy alkyl methacrylates wherein any alkyl groups are selected from ethyl, propyl and butyl, 93 to 40% by weight tackifying monomers selected from $C_{2-18}$ alkyl acrylates and $C_{6-10}$ alkyl methacrylates and 0 to 50% by weight diluent monomers selected from methyl acrylate and $C_{1-5}$ alkyl methacrylates and other non-interfering hydrophobic ethylenically unsaturated copolymerisable monomers.

A sheet material, such as a label, according to the invention comprises a paper or other substrate carrying a coating formed of this adhesive. The sheet material may be applied to a glass bottle or other glass or plastic container and the container may be subjected to normal use conditions, such as exposure to atmospheric humidity or rain but after use, when it is desired to remove the label or other sheet material, this can be achieved simply by washing with warm water.

The preferred polymers are formed from 10 to 20% by weight of the hydrophilic monomers, 93 to 70% by weight tackifying monomers and 0 to 40, generally 10 to 40%, of the diluent monomers.

The polymer may be made from the polymerisable monomers by solution polymerisation in conventional manner, for instance by dissolving the monomers in an alcohol, ketone, ester or other suitable solvent and initiating polymerisation by an azo initiator. However solution polymerisation suffers from several disadvantages, including the handling of organic solvents and the fact that molecular weight tends to be rather low. The polymers are best made by emulsion polymerisation, generally conducted using a water soluble thermal or other initiator such as ammonium persulphate.

The emulsion polymerisation may be conducted in conventional manner using, as emulsifying agent, a conventional surfactant for emulsion polymerisation, for instance a sulphonated nonylphenol ethylene oxide surfactant. The emulsion is usually free of additives other than emulsifier and initiator. The polymerisation is normally permitted to go to completion without any deliberate steps being taken to terminate it.

The product polymer is preferably substantially linear and the polymerisation is therefore conducted in the absence of any cross-linking agent.

The polymer preferably has a second order transition temperature of below 0°C, preferably below -20°C.

The polymerisation conditions are preferably such that the polymer has the highest possible molecular weight and typically have an intrinsic viscosity greater than 3.

The tackifying monomers and diluent monomers and their amounts are selected such that the polymer has appropriate pressure sensitive properties and the hydrophilic monomers and their amounts are selected such that the polymer acquires warm water removable properties without losing its pressure sensitive properties.

Preferably at least 33%, generally at least 50% and preferably at least 75%, by weight, of the tackifying monomer is monomer that contains $C_{6-10}$ alkyl groups and most preferably will be $C_{6-10}$ alkyl acrylates. The preferred tackifying monomer is 2-ethyl hexyl acrylate (often used alone) and the polymer generally contains from 50 to 93% by weight of this. Another useful monomer is butyl acrylate, usually with a greater amount of 2-ethyl hexyl acrylate or other $C_{6-10}$ alkyl acrylate.

The amount of diluent monomer should be less than the amount of tackifying monomer generally less than 50% by weight of the tackifying monomer. The diluent monomers may be selected from any monomers that can be copolymerised with the tackifying and hydrophilic monomers and that do not destroy the pressure sensitive or water removable properties. The diluent monomers are preferably acrylic. The preferred diluent monomer is methyl methacrylate and this is often present in amounts of up to 30%, preferably 15 to 30%, by weight.

The hydrophilic monomer or monomers must be selected from the named materials since other hydrophilic monomers do not appear to be capable of giving the desired combination of adhesion during exposure to ambient atmospheric moisture but easy removability with warm water. For instance less hydrophilic monomers will tend to give a polymer that cannot adequately be removed in warm water whilst more hydrophilic monomers, such as acrylic acid, will tend to give a polymer that either does not adhere adequately during exposure to atmospheric moisture or is so sticky in the presence of warm water that it does not cleanly release from the hard surface during washing. These problems are particularly noticeable when the polymer is made by emulsion polymerisation because of the tendency of very hydrophilic monomers, such as acrylic acid, to concentrate on the surfaces of the particles. Thus although acrylic acid might be expected to be suitable for use in the invention to impart the desired hydrophilic properties to the polymer, in fact it is unsatisfactory.

Preferred hydrophilic monomers are methacrylic acid, hydroxy ethyl acrylate and, most preferably hydroxyl propyl acrylate. Methacrylic acid is preferably partially neutralised, generally after polymerisation. Generally the amounts of methacrylic acid or hydroxy ethyl acrylate that give best results are from 8 or 10% to 15% by weight and the amount of hydroxy propyl acrylate that gives best results is from 12 to 20% by weight.

The monomers, and their amounts, are preferably selected such that the adhesive adheres in the presence of atmospheric moisture and rain at temperatures up to about 30°C but can easily be removed by washing, including agitation, at temperatures of at least 45°C, often 55 to 80°C.

The resulting polymer is formulated as a coating composition in order that it can be applied to the paper or other flexible substrate that is to be rendered adhesive. The coating composition can consist solely of the solution or, preferably, emulsion obtained by the polymerisation or, if desired, minor amounts of thickeners or other conventional coating additives may be included in order to adjust the rheology of the composition. The composition is normally free of plasticiser. The particle size of the emulsion is preferably mainly or wholly below 2 microns, most preferably below 1 micron, e.g. 0.1 to 1 micron.

The composition is applied to the substrate in conventional manner and dried on the substrate to form the pressure sensitive coating. The dry weight of the coating is generally from 10 to 30 g/m². Application may be in conventional manner, for instance direct onto the substrate or indirect, being applied on to a release paper onto which the substrate is then applied.

To test adhesive properties, between 20-22 g/m² of dry adhesive is coated on kraft paper of the type used to manufacture labelstock and the peel strength, shear strength and tack are measured as follows.

PEEL STRENGTH

A strip of coated paper, 2.54 cm wide, is bonded to a glass plate by applying a constant pressure. An Instron testing machine is then used to measure the force required to peel the paper strip, at an angle of 180°, at a rate of 300 mm/minute at 20°C.

SHEAR STRENGTH

A strip of coated paper is fixed to the edge of a glass plate, so that an area of 6.45 square cm (1 square inch) is in contact with the glass. The force required to remove the strip at an angle of 2° is measured at 1.0 mm/minute and 20°C.

TACK

A loop formed from a 2.54 cm strip of coated paper is lowered by an Instron machine onto a glass plate. The force required to remove the tape is measured at a rate of 300 mm/minute at 20°C.

The polymer should be formulated such that tack strength is at least 3 and preferably at least 8 and generally 10 to 15 Newtons, the shear strength is at least 30, generally at least 80 and preferably 100 to 150 Newtons, and the peel strength is at least 6, generally at least 15 and preferably 20 to 50 Newtons.

Water removability is measured by applying paper (8.2 x 3.7 cm) carrying 20 g/m² of the dry composition to a glass bottle and then agitating the bottle gently under water at 60°C. The label should easily detach from the glass, with the adhesive film being carried on the label and being non-tacky in the presence of water.

A valuable advantage of the products of the invention is that although the adhesive is non-tacky when wet, its tack properties are restored upon drying the water from the adhesive.

The following are some examples of the invention. In these the tack, peel and shear strengths are determined as described above.

Example 1

60 parts 2-ethyl hexyl acrylate, 30 parts methyl methacrylate and 10 parts hydroxy ethyl acrylate were pre-emulsified in about 50 parts by weight water using a sulphonated nonylphenol ethylene oxide surfactant. The resultant emulsion was fed over a period of 3 hours into water that was at 80°C and contained ammonium persulphate. The mixture was maintained as an emulsion at about 80°C. Polymerisation was allowed to proceed for a further half hour, at which time it terminated and the mixture was cooled to give a emulsion containing 30% polymer. This emulsion was discharged from the reaction vessel and could be coated onto paper as such, or after adding rheology additives. The product had the following adhesive properties:

Tack: 15 N+

180° Peel: 20 N+

Shear Strength: 100 N

8

A label was coated with this adhesive at 20 g/m² dry and stuck to a glass bottle. When submerged in tap water at 60°C it was found that the label removed itself in under a minute. Furthermore the label was non-tacky when wet, and no adhesive transfer was evident on the glass bottle.

Example 2

A copolymer composition of 90 parts 2-ethyl hexyl acrylate, 10 parts methacrylic acid was prepared in a method similar to the above to yield a 50% active emulsion with the following properties:

    Tack:               4 N
    180° Peel:         16 N
    Shear Strength:   110 N

This pressure sensitive adhesive had similar water sensitive properties to Example 1.

Example 3

A copolymer was formed from 60 parts 2-ethyl hexyl acrylate, 25 parts methyl methacrylate and 15 parts hydroxy propyl acrylate using a method similar to Example 1 to give a 50% active emulsion having the following properties:

    Tack: above        10 N
    Shear Strength:    110 N
    180° Peel: above    20 N

It had very good water sensitivity.

0147067

## CLAIMS

1. A pressure sensitive adhesive polymer formed by copolymerising a mixture of monomers comprising tackifying monomers selected from $C_{2-18}$ alkyl acrylates and $C_{6-10}$ alkyl methacrylates, diluent hydrophobic ethylenically unsaturated copolymerisable monomers and hydrophilic monomers characterised in that the amount of tackifying monomer is 93 to 40% by weight, the amount of diluent monomer is 0 to 50% by weight and the amount of hydrophilic monomer is 7 to 30% by weight and the hydrophilic monomers are selected from methacrylic acid, water soluble salts of methacrylic acid with an amine or alkali metal, hydroxy alkyl acrylates and hydroxy alkyl methacrylates wherein any alkyl groups are selected from ethyl, propyl and butyl and a coating of the polymer on a hard surface is removable with warm water.

2. A polymer according to claim 1 formed from 70 to 93% by weight tackifying monomers, 0 to 40%, preferably 10 to 40% by weight diluent monomers and 10 to 20% by weight hydrophilic monomers.

3. A polymer according to claim 1 or claim 2 in which the hydrophilic monomer is selected from hydroxy propyl acrylate, preferably in an amount of from 12 to 20% by weight, methacrylic acid or a salt thereof or hydroxy ethyl acrylate, preferably in an amount of from 10 to 15% by weight.

4. A polymer according to any preceding claim in which at least 50% by weight of the tackifying monomers, and 50 to 93% by weight of the monomers, is 2-ethyl hexyl acrylate.

5. A polymer according to any preceding claim in which the monomers contain 15 to 30% by weight methyl methacrylate.

6. A polymer according to any preceding claim formed from 50 to 93% by weight 2-ethyl hexyl acrylate, 0 to 30% (preferably 15 to 30%) by weight methyl methacrylate and 8 to 20% by weight hydrophilic monomers selected from hydroxy propyl acrylate, methacrylic acid, methacrylic acid salts, and hydroxy ethyl acrylate.

7. A polymer according to any preceding claim that is substantially linear.

8. A polymer according to any preceding claim that has been made by emulsion polymerisation.

9. A polymer according to any preceding claim in the form of an aqueous emulsion having a particle size below 2 microns, preferably 0.1 to 1 micron.

10. A sheet material comprising a flexible substrate carrying an adhesive coating formed of a polymer according to any preceding claim.

11. A sheet material according to claim 10 having tack strength at least 3 and preferably 10 to 15 Newtons, shear strength at least 30 and preferably 100 to 150 Newtons and peel strength at least 6 and preferably 20 to 50 Newtons.

12. A sheet material according to claim 10 or claim 11 in which the adhesive coating will adhere to hard surfaces selected from glass and plastic when dry and will be removed by agitation with water at an elevated temperature above 50°C.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 763 117 (L.W. McKENNA Jr. et al.) * Abstract; column 8, claims 1,4; column 4, lines 11-13 * | 1,3,8, 10 | C 09 J 3/14 C 09 J 7/02 C 08 F 220/00 |
| A | US-A-3 269 994 (MILTON B. HORN) * Column 6, claim 1 * | 1,10 | |
| A | FR-A-2 356 706 (MINNESOTA MINING) | | |

TECHNICAL FIELDS SEARCHED (Int. Cl 4)

C 09 J

The present search report has been drawn up for all claims

| Place of search | Date of completion of the search | Examiner |
|---|---|---|
| THE HAGUE | 11-03-1985 | GIRARD Y.A. |